# EUROPÄISCHE PATENTSCHRIFT

(11) **EP 4 617 092 B1**
(45) Veröffentlichungstag und Bekanntmachung des Hinweises auf die Patenterteilung: **12.08.2026**
(21) Anmeldenummer: 25162879.8
(22) Anmeldetag: 11.03.2025
(51) Int. Cl.: B60K 7/00, B62D 7/02, H02K 9/06, H02K 5/15, H02K 5/20, B60K 17/04

(54) **ANTRIEBSANORDNUNG FÜR EIN FLURFÖRDERZEUG**
DRIVE ARRANGEMENT FOR AN INDUSTRIAL TRUCK
AGENCEMENT D'ENTRAÎNEMENT POUR UN CHARIOT DE MANUTENTION

(30) Priorität: 14.03.2024 DE 102024107269
(43) Veröffentlichungstag der Anmeldung: 17.09.2025
(73) Patentinhaber: Jungheinrich AG, 22047 Hamburg (DE)
(72) Erfinder: BECKER, Marion, 22844 Norderstedt (DE); ZEIDLER, Christoph, 84032 Landshut (DE)
(74) Vertreter: Weickmann & Weickmann PartmbB

(56) Entgegenhaltungen:
- EP-A1- 3 517 483
- EP-B1- 1 928 680
- DE-A1- 102004 005 869
- DE-A1- 3 133 027

## Beschreibung

Die vorliegende Erfindung betrifft ein Flurförderzeug, welches eine Antriebsanordnung umfasst.

Es ist bekannt, in bestimmten Typen von Flurförderzeugen, beispielsweise Schubmaststaplern mit zwei Radarmen, Antriebsanordnungen von einem Typ vorzusehen, welcher gleichzeitig ein Antreiben mittels eines Antriebsmotors sowie ein Lenken des entsprechenden Rads ermöglicht. Dem hingegen sind den jeweiligen Lastarmen derartiger Schubmaststapler lediglich sogenannte Lasträder zugeordnet, welche weder angetrieben noch gelenkt sind und somit lediglich zu einer Abstützung des Fahrzeugs auf dem Untergrund dienen. Insbesondere bieten sich hierbei dreirädrige Ausführungen an, in welchen neben den beiden genannten Lasträdern an den Lastarmen lediglich eine einzelne derartige Antriebsanordnung vorgesehen ist, wodurch die Konstruktion und der Betrieb des entsprechenden Fahrzeugs vereinfacht und kostengünstiger gestaltet werden können. Ein Beispiel eines solchen Flurförderzeugs ist aus der EP 3 517 483 A1 der vorliegenden Anmelderin bekannt, so dass der prinzipielle Aufbau eines solchen Fahrzeugs sowie sein Antriebskonzept als aus dem Stand der Technik bekannt vorausgesetzt werden.

Ein weiteres Beispiel für ein Flurförderzeug mit einer Antriebsanordnung mit einem Antriebsrad, einem Fahrantriebsmotor, einer Trägerplatte, einem Lenklager, einem Lenkmotor und einem ersten Schild ist ferner aus der EP 1 928 680 B1 bekannt.

Insbesondere kommen in derartigen Ausgestaltungen von Flurförderzeugen in der Regel Elektromotoren zum Antrieb der entsprechenden Antriebsräder zum Einsatz, welche durch eine im Fahrzeugkörper aufgenommene Batterieanordnung mit elektrischer Leistung versorgt werden und aufgrund der Wärmeentwicklung durch die fließenden Ströme mit teilweise erheblichen Stromstärken während ihres Betriebs gekühlt werden müssen.

Zu diesem Zweck wurden in bekannten Antriebsanordnungen aus dem Stand der Technik dedizierte Lüftungsschlitze vorgesehen, welche einen Luftstrom in dem entsprechenden Gehäuse des Antriebsmotors ermöglichen. Insbesondere wurden hierzu nach unten offene Getriebe im Zusammenhang mit den bekannten Antriebmotoren eingesetzt, sodass eine Belüftung des entsprechenden Antriebsmotors von der Unterseite des Fahrzeugs her ermöglicht worden ist. Hierbei zeigt sich jedoch, dass durch die Anordnung der Lüftungszugänge an der Unterseite des Fahrzeugs ein erhöhter Eintrag von Verschmutzungen oder Fremdkörpern in das Motorgehäuse vom Fahruntergrund her festgestellt wurde, was die Lebensdauer der entsprechenden Antriebsmotoren verringert hat, beziehungsweise einen erhöhten Wartungsaufwand zur Folge hatte.

Dementsprechend ist es die Aufgabe der vorliegenden Erfindung, ein bekanntes Flurförderzeug derart weiterzubilden, dass die oben genannten Nachteile des bekannten Stands der Technik ausgeräumt werden und insbesondere eine Lüftung des Antriebsmotors der Antriebsanordnung ermöglicht wird, ohne dass hierbei Verschmutzungen in das Motorgehäuse vom Fahruntergrund her eindringen können.

Zu diesem Zweck und zur Lösung der oben formulierten Aufgabe umfasst das erfindungsgemäße Flurförderzeug einen Fahrzeugkörper, wenigstens zwei nicht angetriebene Lasträder und wenigstens eine Antriebsanordnung, die Antriebsanordnung wiederum umfassend einen Fahrantriebsmotor mit einem Motorgehäuse, welcher dazu eingerichtet ist, ein drehfest damit gekoppeltes Antriebsrad anzutreiben; eine Trägerplatte, welche einem Fahrzeugkörper des Flurförderzeugs zugeordnet ist; ein Lenklager, welches zwischen der Trägerplatte und dem Fahrantriebsmotor angeordnet und dazu eingerichtet ist, eine Lenkrotation des Antriebsrads gegenüber der Trägerplatte zu ermöglichen; einen Lenkmotor, welcher dazu eingerichtet ist, die Lenkrotation des Antriebsrads gegenüber der Trägerplatte anzutreiben; und ein erstes Schild, welches an der Oberseite der Trägerplatte vollumfänglich den Fahrantriebsmotor umschließt. Erfindungsgemäß ist das erste Schild an seiner Oberseite mit wenigstens einer Lüftungsöffnung ersehen, welche ein Einströmen oder Ausströmen von Luft in das oder aus dem Motorgehäuse des Fahrantriebsmotors zu dessen Kühlung ermöglicht.

Dementsprechend bildet in dem erfindungsgemäßen Flurförderzeug das an einer geeigneten Radaufhängung getragene Antriebsrad eine zum Lenken des Flurförderzeugs um eine in vertikaler Richtung verlaufende Rotationsachse verschwenkbare Baugruppe, welche mittels des Lenklagers durch eine Trägerplatte am Fahrzeugkörper des Flurförderzeugs getragen ist. Weiterhin sei darauf hingewiesen, dass das Umschließen des Fahrantriebsmotors durch das erste Schild derart zu verstehen ist, dass das erste Schild einmal um volle 360° um den Fahrantriebsmotor im Bereich seiner Höhenerstreckung herumläuft, während sich der Fahrantriebsmotor in vertikaler Richtung jedoch über das erste Schild nach oben hinaus erstreckt.

Indem nunmehr ferner das zwischen der Oberseite der Trägerplatte und dem Antriebsmotor vorgesehene erste Schild mit wenigstens einer dedizierten Lüftungsöffnung versehen ist, wird es ermöglicht, auf eine Ansaugung von Kühlungsluft von der Unterseite des Fahrzeugs her zu verzichten und somit den Eintrag von Verschmutzungen oder Fremdkörpern vom Fahruntergrund her zu verhindern. Hierbei versteht sich, dass die wenigstens eine Lüftungsöffnung in einer Weise ausgeführt sein soll, dass auch von ihrer Oberseite her keine mechanischen Gegenstände, wie beispielsweise Schrauben, Scheiben oder ähnliches, in sie hineinfallen können, also insbesondere mit relativ geringen Abmessungen. Im Übrigen wird durch das reine Ansaugen von Kühlungsluft von der Oberseite der Trägerplatte her gewährleistet, dass der Antriebsmotor nicht durch eingetragene Verschmutzungen beschädigt werden kann und dementsprechend die Lebensdauer des Antriebsmotors beziehungsweise seine Wartungsintervalle verlängert werden können.

Wie bereits weiter oben angedeutet, kann der Fahrantriebsmotor als ein Elektromotor mit einem Stator und einem Rotor ausgeführt sein, wobei in einer derartigen Ausgestaltung der Rotor des Fahrantriebsmotors insbesondere mit einer Mehrzahl von Lüfterflügeln versehen sein kann. Durch dieses Vorsehen von Lüfterflügeln an dem innerhalb des Motorgehäuse rotierenden Rotors wird es ermöglicht, einen Luftstrom innerhalb des Motorgehäuses zur Eigenbelüftung des Motors während dessen Betrieb zu erzeugen, sodass beispielsweise bei einer erhöhten Drehzahl des Fahrantriebsmotors und einer damit verbundenen größeren Leistungsaufnahme auch gleichzeitig eine erhöhte Lüftungsleistung innerhalb des Motorgehäuses bereitgestellt werden kann. Hierbei ist bei geeigneter Ausgestaltung der Lüfterflügel ferner ebenfalls ermöglicht, den gewünschten Luftstrom innerhalb des Motorgehäuses ungeachtet der aktuellen Rotationsrichtung des Rotors hervorzurufen.

In Weiterbildung der Erfindung kann dem Fahrantriebsmotor ferner ein zweites Schild zugeordnet sein, welches oberhalb des ersten Schilds angeordnet und mit wenigstens einer weiteren Lüftungsöffnung versehen ist, welche ein Ausströmen oder Einströmen von Luft aus dem bzw. in das Motorgehäuse ermöglicht.

Grundsätzlich ermöglichen die wenigstens eine Lüftungsöffnung und die wenigstens eine weitere Lüftungsöffnung eine Luftströmung sowohl in aufwärtiger Richtung als auch in abwärtiger Richtung, wobei bei Luftströmung in aufwärtiger Richtung die wenigstens eine Lüftungsöffnung wenigstens eine Belüftungsöffnung und die wenigstens eine weitere Lüftungsöffnung wenigstens eine Entlüftungsöffnung bilden, während bei Luftströmung in abwärtiger Richtung die wenigstens eine Lüftungsöffnung wenigstens eine Entlüftungsöffnung und die wenigstens eine weitere Lüftungsöffnung wenigstens eine Belüftungsöffnung bilden.

Bei Strömung in aufwärtiger Richtung kann die durch die Lüftungsöffnung (Belüftungsöffnung) eingesaugte Kühlungsluft an einer vertikal weiter oben liegenden Stelle durch die wenigstens eine weitere Lüftungsöffnung (Entlüftungsöffnung) in dem zweiten Schild wieder aus dem Motorgehäuse herausgeführt werden, sodass in optimaler Weise eine Kühlwirkung innerhalb des Motorgehäuses erzielt werden kann. Hierbei kann die Luftströmung ferner durch einen aus der Erwärmung der Luft an dem zu kühlenden Antriebsmotor resultierenden Kamineffekt unterstützt werden.

In Weiterbildung der Erfindung kann in bestimmten Bauformen von erfindungsgemäßen Antriebsanordnungen das zweite Schild im Bereich einer Bremsvorrichtung angeordnet sein, welche an der dem Antriebsrad abgewandten, vertikal oberen Seite des Antriebsmotors angeordnet ist. Derartige Bremsvorrichtungen an der Oberseite von gattungsgemäßen Antriebsanordnungen sind an sich aus dem Stand der Technik bekannt und benötigen ebenfalls unter gewissen Umständen eine Kühlung, welche durch das Vorsehen des zweiten Schilds mit den darin bereitgestellten weiteren Lüftungsöffnungen in analoger Weise ohne erheblichen konstruktiven Zusatzaufwand bewerkstelligt werden kann.

Wenngleich die konkrete Ausgestaltung und Anordnung der wenigstens einen Lüftungsöffnung sowie der wenigstens einen weiteren Lüftungsöffnung abhängig von den baulichen Vorgaben durch die Peripherie der Antriebsanordnung in dem jeweiligen Flurförderzeug unterschiedlich gewählt werden können, kann in besonders einfacher und wirkungsvoller Weise die wenigstens eine Lüftungsöffnung des ersten Schilds und oder die wenigstens eine weitere Lüftungsöffnung des zweiten Schilds durch eine Mehrzahl von umfänglich verteilten Schlitzen gebildet sein, welche einerseits einen ausreichend großen effektiven Strömungsquerschnitt für Kühlungsluft ermöglichen, andererseits jedoch in Breitenrichtung schmal genug gewählt werden können, um zuverlässig ein Eindringen von Fremdgegenständen verhindern zu können.

Ferner kann sich die wenigstens eine Lüftungsöffnung des ersten Schilds in Richtung von der Trägerplatte weg verjüngt.

Zur Erhöhung der Stabilität des ersten Schilds kann dieses zwischen wenigstens zwei einander benachbarten Lüftungsöffnungen mit einer Versteifungsrippe ausgebildet sein.

Weiterhin kann zur Sicherstellung der gewünschten Funktionsweise der erfindungsgemäßen Antriebsanordnung das erste Schild auf dem Lenklager befestigt und zentriert sein.

Zudem kann die Antriebsanordnung ferner eine Getriebeanordnung umfassen, welche zwischen dem Fahrantriebsmotor und dem Antriebsrad vorgesehen ist, um eine gewünschte Übersetzung der Rotation des Antriebsmotors zu dem Antriebsrad sowie gegebenenfalls eine Umlenkung der entsprechenden Rotationsachse zu bewerkstelligen.

Hierbei kann die aus der Trägerplatte, dem Lenklager und dem Getriebe gebildete Baugruppe derart ausgeführt sein, dass die Oberseite der Trägerplatte vom Fahruntergrund abgeschirmt ist, wodurch in jedem Fall ein Eindringen von Verschmutzungen vom Fahruntergrund her in den Bereich des Motorgehäuses verhindert werden kann.

Wie oben angesprochen betrifft die vorliegende Erfindung somit ein Flurförderzeug, beispielsweise einen Schubmaststapler, welches einen Fahrzeugkörper, wenigstens zwei nicht angetriebene Lasträder und wenigstens eine Antriebsanordnung der oben beschriebenen Art umfasst.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Figur 1: ein erfindungsgemäßes Flurförderzeug in einer perspektivischen Ansicht von schräg unten;
- Figur 2: die Antriebsanordnung des Flurförderzeugs aus Figur 1 in einer isometrischen Ansicht; und
- Figur 3: die Antriebsanordnung aus Figur 2 in einer Querschnittsdarstellung.

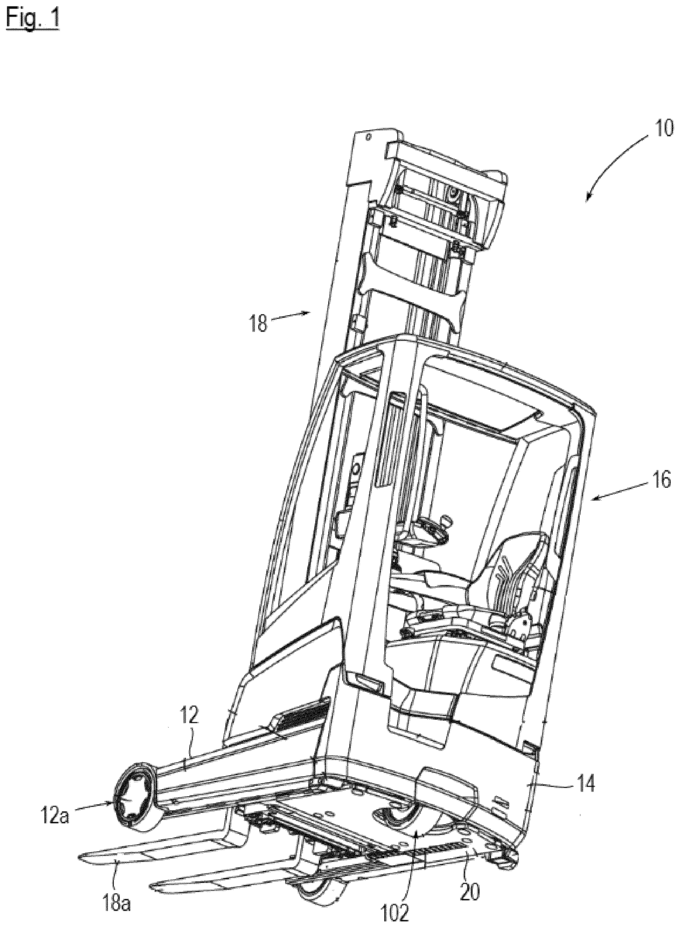

Unter Bezugnahme auf Figur 1 sei nun zunächst die prinzipielle Bauweise eines erfindungsgemäßen Flurförderzeugs erläutert, welches insbesondere als Schubmaststapler ausgeführt ist. Es sei jedoch bereits an dieser Stelle erwähnt, dass entsprechende Antriebsanordnungen auch in anderen Typen von Flurförderzeugen zum Einsatz kommen können, welche Antriebsanordnungen zum kombinierten Antreiben und Lenken von Antriebsrädern umfassen.

Das in Figur 1 gezeigte Flurförderzeug ist hierbei ganz allgemein mit dem Bezugszeichen 10 bezeichnet und umfasst Radarme 12, an deren hinteren Enden jeweilige Lasträder 12a angeordnet sind. In einem vorderen Bereich des Flurförderzeugs 10 befindet sich an der den Randarmen 12 abgewandten Seite ein Fahrzeugkörper 14, in welchem zum einen eine Fahrerkabine 16 mit an sich bekannten Bedieneinrichtungen und einem Fahrersitz oder -stand und zum anderen nicht dargestellte funktionelle Komponenten des Flurförderzeugs 10 angeordnet bzw. aufgenommen sind, wie beispielsweise eine Batterieanordnung zum Versorgen elektrischer und elektronischer Systeme des Fahrzeugs 10, insbesondere der weiter unten beschriebenen Antriebsanordnung, ein Hydrauliksystem oder Ähnliches.

Zwischen den beiden Radarmen 12 umfasst das Fahrzeug 10 ferner einen Schubmast 18, an welchem in höhenverlagerbarer Weise ein Lasttragemittel 18a mit zwei Lastgabeln getragen ist, welches zur Aufnahme von Lasten vorgesehen und entsprechend mit funktionellen Komponenten ausgestattet ist.

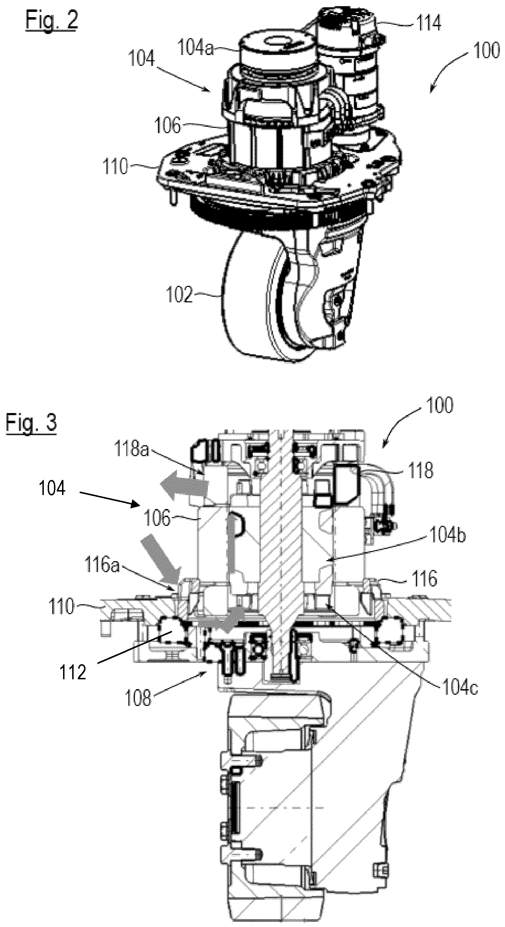

Das Flurförderzeug 10 der gezeigten Ausführungsform ist elektrisch angetrieben und umfasst hierzu eine Antriebsanordnung 100 mit einem lenkbaren Antriebsrad 102, welche anhand der Figuren 2 und 3 detailliert beschrieben werden wird. Weiterhin ist an der Unterseite des Flurförderzeugs 10 eine das Fahrzeug nach unten abschließende Grundplatte 20 mit einer Ausnehmung vorgesehen, durch welche hindurch sich das Antriebsrad 102 in einer schwenkbaren Weise erstreckt, um das Lenken davon zu ermöglichen.

Nun sei unter Bezugnahme auf die isometrische Darstellung aus Figur 2 sowie die Querschnittsansicht aus Figur 3 die Antriebsanordnung 100 des Flurförderzeugs 10 aus Figur 1 erläutert. Neben dem bereits angesprochenen Antriebsrad 102 umfasst die Antriebsanordnung 100 einen Fahrantriebsmotor 104 mit einem Motorgehäuse 106, welcher dazu eingerichtet ist, über eine zwischengeschaltete Getriebeanordnung 108 das Antriebsrad 102 anzutreiben. Hierbei ist die durch den Fahrantriebsmotor 104, die Getriebeanordnung 108 und das Antriebsrad 102 gebildete Baugruppe mittels einer Trägerplatte 110 getragen, welche wiederum am Fahrzeugkörper 14 des Flurförderzeugs 10 montiert ist.

Um nun zusätzlich zu der Antriebsfunktion des Antriebsrads 102 dieses auch für ein Lenken um eine in vertikaler Richtung verlaufende Rotationsachse rotieren zu können, umfasst die Antriebsanordnung 100 ferner ein Lenklager 112, welches zwischen der Trägerplatte 110 und dem Fahrantriebmotor 104 angeordnet und dazu eingerichtet ist, eine Lenkrotation des Antriebsrads 102 und der dieses tragenden Radaufhängung gegenüber der Trägerplatte 110 zu ermöglichen. In der hier dargestellten Ausführungsform wird die Lenkrotation des Antriebsrads 102 gegenüber der Trägerplatte 110 durch einen benachbart zu dem Antriebsmotor 104 angeordneten Lenkmotor 114 angetrieben, welcher in präziser Weise eine Lenkrotation des Antriebsrads 102 um die bereits angesprochene, in vertikaler Richtung verlaufende Rotationsachse antreiben kann.

Des Weiteren umfasst die Antriebsanordnung 100 ein erstes Schild 116 an der Oberseite der Trägerplatte 110, welches dem Fahrantriebsmotor 104 in der entsprechenden Höhe vollumfänglich umschließt, sowie ein zweites Schild 118, welches oberhalb des ersten Schilds 116 und im Bereich einer dem Antriebsmotor 104 zugeordneten Bremse 104a angeordnet ist.

Wie insbesondere in der Querschnittsansicht aus Figur 3 deutlich wird und in dieser Figur durch entsprechende Pfeile dargestellt ist, ist hierbei das erste Schild 116 mit einer Mehrzahl von Lüftungsöffnungen 116a versehen, während in ähnlicher Weise das zweite Schild 118 mit einer Mehrzahl von weiteren Lüftungsöffnungen 118a bereitgestellt ist, welche ein Zirkulieren von Luft durch das Motorgehäuse 106 hindurch ermöglichen.

Bei der in Figur 3 dargestellten Ausführungsform zirkuliert die Luft, wie durch Pfeile angedeutet, in aufwärtiger Richtung, so dass die Lüftungsöffnungen 116a Belüftungsöffnungen und die weiteren Lüftungsöffnungen 118a Entlüftungsöffnungen bilden.

Die entsprechende Zirkulation von Kühlungsluft kann im Betrieb des Antriebsmotors 104 dadurch hervorgerufen werden, dass der Rotor 104b des Fahrantriebsmotors 104 mit einer Mehrzahl von Lüfterflügeln 104c versehen ist, welche ungeachtet der Rotationsrichtung des Rotors 104b unter Ausnutzung eines Kamineffekts innerhalb des Motorgehäuses 106 ein Strömen von Luft durch die Lüftungsöffnungen 116a hinein und aus den weiteren Lüftungsöffnungen 118a hinaus antreiben.

Indem auf diese Weise Kühlungsluft für den Fahrantriebsmotor 104 von oberhalb der Trägerplatte 110 angesaugt wird, kann in der erfindungsgemäßen Antriebsanordnung 100 verhindert werden, dass Verschmutzungen von unterhalb des Fahrzeugs 10 beziehungsweise vom Fahruntergrund in das Motorgehäuse 106 eindringen und die Funktionsweise des Antriebsmotors 104 gefährden.

## Patentansprüche

1. Flurförderzeug (10), umfassend:
einen Fahrzeugkörper (14);
wenigstens zwei nicht angetriebene Lasträder (12a); und
wenigstens eine Antriebsanordnung (100), die Antriebsanordnung (100) umfassend ein Antriebsrad (102),
**dadurch gekennzeichnet, dass** die Antriebsanordnung (100) ferner umfasst:
- einen Fahrantriebsmotor (104) mit einem Motorgehäuse (106), welcher dazu eingerichtet ist, das drehfest damit gekoppelte Antriebsrad (102) anzutreiben;
- eine Trägerplatte (110), welche einem Fahrzeugkörper (14) des Flurförderzeugs (10) zugeordnet ist;
- ein Lenklager (112), welches zwischen der Trägerplatte (110) und dem Fahrantriebsmotor (104) angeordnet und dazu eingerichtet ist, eine Lenkrotation des Antriebsrads (102) gegenüber der Trägerplatte (110) zu ermöglichen;
- einen Lenkmotor (114), welcher dazu eingerichtet ist, die Lenkrotation des Antriebsrads (102) gegenüber der Trägerplatte (110) anzutreiben; und
- ein erstes Schild (116), welches an der Oberseite der Trägerplatte (110) vollumfänglich den Fahrantriebsmotor (104) umschließt,
wobei das erste Schild (116) an seiner Oberseite mit wenigstens einer Lüftungsöffnung (116a) versehen ist, welche ein Einströmen oder Ausströmen von Luft in das oder aus dem Motorgehäuse (106) des Fahrantriebsmotors (104) zu dessen Kühlung ermöglicht.

2. Flurförderzeug (10) nach Anspruch 1,
wobei dem Fahrantriebsmotor (104) ferner ein zweites Schild (118) zugeordnet ist, welches oberhalb des ersten Schilds (116) angeordnet und mit wenigstens einer weiteren Lüftungsöffnung (118a) versehen ist, welche ein Ausströmen oder Einströmen von Luft aus dem oder in das Motorgehäuse (106) ermöglicht.

3. Flurförderzeug (10) nach Anspruch 2,
wobei das zweite Schild (118) im Bereich einer Bremsvorrichtung (104a) angeordnet ist, welche an der dem Antriebsrad (102) abgewandten Seite des Antriebsmotors (104) angeordnet ist.

4. Flurförderzeug (10) nach einem der vorhergehenden Ansprüche,
wobei der Fahrantriebsmotor (104) als ein Elektromotor mit einem Stator und einem Rotor (104b) ausgeführt ist.

5. Flurförderzeug (10) nach Anspruch 4,
wobei der Rotor (104b) des Fahrantriebmotors (104) mit einer Mehrzahl von Lüfterflügeln (104c) versehen ist.

6. Flurförderzeug (10) nach einem der Ansprüche 2 und 3,
wobei die wenigstens eine Lüftungsöffnung (116a) des ersten Schilds (116) und/oder die wenigstens eine weitere Lüftungsöffnung (118a) des zweiten Schilds (118) durch eine Mehrzahl von umfänglich verteilten Schlitzen gebildet sind.

7. Flurförderzeug (10) nach einem der vorhergehenden Ansprüche,
wobei die wenigstens eine Lüftungsöffnung (116a) des ersten Schilds (116) sich in Richtung von der Trägerplatte (110) weg verjüngt.

8. Flurförderzeug (10) nach einem der vorhergehenden Ansprüche,
wobei das erste Schild (116) zwischen wenigstens zwei einander benachbarten Lüftungsöffnungen (116a) mit einer Versteifungsrippe ausgebildet ist.

9. Flurförderzeug (10) nach einem der vorhergehenden Ansprüche,
wobei das erste Schild (116) auf dem Lenklager (112) befestigt und zentriert ist.

10. Flurförderzeug (10) nach einem der vorhergehenden Ansprüche,
ferner umfassend eine Getriebeanordnung (108), welche zwischen dem Fahrantriebsmotor (104) und dem Antriebsrad (102) vorgesehen ist.

11. Flurförderzeug (10) nach dem vorhergehenden Anspruch,
wobei die aus der Trägerplatte (110), dem Lenklager (112) und der Getriebeanordnung (108) gebildete Baugruppe derart ausgeführt ist, dass die Oberseite der Trägerplatte (100) vom Fahruntergrund abgeschirmt ist.

## Claims

1. Industrial truck (10), comprising:
a vehicle body (14);
at least two non-driven load wheels (12a); and
at least one drive assembly (100), the drive assembly (100) comprising a drive wheel (102);
**characterized in that** the drive assembly (100) further comprises
- a drive motor (104) with a motor housing (106), which is configured to drive the drive wheel (102) rotationally fixedly coupled thereto;
- a support plate (110), which is associated with a vehicle body (14) of the industrial truck (10);
- a steering bearing (112), which is arranged between the support plate (110) and the drive motor (104) and is configured to permit a steering rotation of the drive wheel (102) relative to the support plate (110);
- a steering motor (114) which is configured to drive the steering rotation of the drive wheel (102) relative to the support plate (110); and
- a first shield (116), which, on the upper side of the support plate (110), fully circumferentially encloses the drive motor (104),
wherein the first shield (116) is provided on its upper side with at least one ventilation opening (116a), which allows air to flow into or out of the motor housing (106) of the drive motor (104) for cooling the same.

2. Industrial truck (10) according to claim 1,
wherein the drive motor (104) is further associated with a second shield (118), which is arranged above the first shield (116) and is provided with at least one further ventilation opening (118a), which allows air to flow out of or into the motor housing (106).

3. Industrial truck (10) according to claim 2,
wherein the second shield (118) is arranged in the region of a braking device (104a), which is arranged on the side of the drive motor (104) facing away from the drive wheel (102).

4. Industrial truck (10) according to one of the preceding claims,
wherein the drive motor (104) is designed as an electric motor with a stator and a rotor (104b).

5. Industrial truck (10) according to claim 4,
wherein the rotor (104b) of the drive motor (104) is provided with a plurality of fan blades (104c).

6. Industrial truck (10) according to one of claims 2 and 3,
wherein the at least one ventilation opening (116a) of the first shield (116) and/or the at least one further ventilation opening (118a) of the second shield (118) are formed by a plurality of circumferentially distributed slits.

7. Industrial truck (10) according to one of the preceding claims,
wherein the at least one ventilation opening (116a) of the first shield (116) tapers away from the support plate (110).

8. Industrial truck (10) according to one of the preceding claims,
wherein the first shield (116) is formed with a stiffening rib between at least two adjacent ventilation openings (116a).

9. Industrial truck (10) according to one of the preceding claims,
wherein the first shield (116) is secured to and centred on the steering bearing (112).

10. Industrial truck (10) according to one of the preceding claims,
further comprising a gear assembly (108) which is provided between the drive motor (104) and the drive wheel (102).

11. Industrial truck (10) according to the preceding claim,
wherein the assembly formed by the support plate (110), the steering bearing (112) and the gear assembly (108) is designed such that the upper surface of the support plate (100) is shielded from the travel surface.

## Revendications

1. Chariot de manutention (10) comprenant :
un corps de véhicule (14) ;
au moins deux roues porteuses non motrices (12a) ; et
au moins un ensemble d'entraînement (100), ledit ensemble d'entraînement (100) comprenant une roue motrice (102),
**caractérisé en ce que** l'ensemble d'entraînement (100) comprend en outre :
- un moteur d'entraînement en translation (104) doté d'un carter de moteur (106) et agencé pour entraîner la roue motrice (102) couplée solidairement en rotation à celui-ci ;
- une plaque de support (110) associée à un corps de véhicule (14) du chariot de manutention (10) ;
- un palier de direction (112) qui est disposé entre la plaque de support (110) et le moteur d'entraînement en translation (104) et qui est agencé pour permettre une rotation de direction de la roue motrice (102) par rapport à la plaque de support (110) ;
- un moteur de direction (114) agencé pour entraîner la rotation de direction de la roue motrice (102) par rapport à la plaque de support (110) ; et
- un premier tablier (116) qui, sur la face supérieure de la plaque de support (110), entoure le moteur d'entraînement en translation (104) sur toute sa circonférence,
le premier tablier (116) étant muni, sur sa face supérieure, d'au moins une ouverture de ventilation (116a) qui permet à l'air d'entrer dans le carter (106) du moteur d'entraînement en translation (104) ou d'en sortir, afin d'assurer son refroidissement.

2. Chariot de manutention (10) selon la revendication 1,
dans lequel un deuxième tablier (118) est en outre associé au moteur d'entraînement en translation (104), qui est disposé au-dessus du premier tablier (116) et qui est pourvu d'au moins une autre ouverture de ventilation (118a) qui permet à l'air de sortir du carter de moteur (106) ou d'entrer dans celui-ci.

3. Chariot de manutention (10) selon la revendication 2,
dans lequel le deuxième tablier (118) est disposé au niveau d'un dispositif de freinage (104a) qui est agencé sur le côté du moteur d'entraînement (104) détourné de la roue motrice (102).

4. Chariot de manutention (10) selon l'une des revendications précédentes,
dans lequel le moteur d'entraînement en translation (104) est réalisé sous la forme d'un moteur électrique comportant un stator et un rotor (104b).

5. Chariot de manutention (10) selon la revendication 4,
dans lequel le rotor (104b) du moteur d'entraînement en translation (104) est muni d'une pluralité d'ailettes de ventilation (104c).

6. Chariot de manutention (10) selon l'une des revendications 2 et 3,
dans lequel ladite au moins une ouverture de ventilation (116a) du premier tablier (116) et/ou ladite au moins une autre ouverture de ventilation (118a) du deuxième tablier (118) sont formées par une pluralité de fentes réparties sur la circonférence.

7. Chariot de manutention (10) selon l'une des revendications précédentes,
dans lequel ladite au moins une ouverture de ventilation (116a) du premier tablier (116) se rétrécit dans une direction s'éloignant de la plaque de support (110).

8. Chariot de manutention (10) selon l'une des revendications précédentes,
dans lequel le premier tablier (116) est pourvu d'une nervure de renfort entre au moins deux ouvertures de ventilation (116a) adjacentes.

9. Chariot de manutention (10) selon l'une des revendications précédentes,
dans lequel le premier tablier (116) est fixé et centré sur le palier de direction (112).

10. Chariot de manutention (10) selon l'une des revendications précédentes,
comprenant en outre un système de transmission (108) prévu entre le moteur d'entraînement en translation (104) et la roue motrice (102).

11. Chariot de manutention (10) selon la revendication précédente,
dans lequel l'ensemble formé par la plaque de support (110), le palier de direction (112) et le système de transmission (108) est conçu de telle sorte que la face supérieure de la plaque de support (100) soit protégée du sol sousjacent.
